# EUROPÄISCHE PATENTSCHRIFT

(11) **EP 3 322 644 B1**
(45) Veröffentlichungstag und Bekanntmachung des Hinweises auf die Patenterteilung: **20.03.2024**
(21) Anmeldenummer: 16738418.9
(22) Anmeldetag: 12.07.2016
(51) Int. Cl.: B65D 8/00, B65D 1/30, B65D 43/16, B65D 77/20, B29C 45/16

(54) **BEHÄLTER UND VERBAND AUS EINER ANZAHL VON BEHÄLTERN**
CONTAINER AND LINKAGE CONSISTING OF A NUMBER OF CONTAINERS
RÉCIPIENTS ET PACK D'UN CERTAIN NOMBRE DE RÉCIPIENTS

(30) Priorität: 15.07.2015 AT 506242015
(43) Veröffentlichungstag der Anmeldung: 23.05.2018
(73) Patentinhaber: Medinoxx GmbH, 6020 Innsbruck (AT)
(72) Erfinder: STEINER, Gottfried, 8724 Spielberg (AT); HÄFNER, Jens, 6020 Innsbruck (AT)
(74) Vertreter: Vinazzer, Edith
(86) Internationale Anmeldenummer: PCT/EP2016/066543
(87) Internationale Veröffentlichungsnummer: WO 2017/009340

(56) Entgegenhaltungen:
- EP-A1- 0 299 571
- EP-A1- 2 319 675
- EP-A1- 2 377 775
- EP-A1- 2 479 120
- EP-A2- 2 266 889
- WO-A1-2013/107897
- DE-A1-102009 022 384
- FR-A1- 2 733 715
- GB-A- 2 172 837

## Beschreibung

Die Erfindung betrifft einen Behälter zum Verpacken von flüssigen, pastösen oder festen Subtanzen oder von Kleinteilen, welcher einen Becher aus Kunststoff und einen mit diesem flüssigkeitsdicht verschließbaren Deckel aus Kunststoff aufweist, wobei der Deckel einen mit einer ebenen Oberfläche versehenen Randteil und eine mit der Oberfläche des Randteiles flüssigkeitsdicht verbundene Siegelfolie aufweist, welche nachträglich, insbesondere nach dem Befüllen des Bechers, auf der Oberfläche des Randteiles (6) aufgeschweißt ist, wobei der Becher gemeinsam mit dem Randteil des Deckels in einem Zwei-Komponenten-Spritzgussverfahren hergestellt ist. Die Erfindung betrifft ferner einen Verband aus einer Anzahl von in einer Reihe angeordneten Behältern.

Ein derartiger Behälter ist aus der EP 2 319 675 A1 bekannt. Dieser Behälter ist in einem Zwei-Komponenten-Spritzgussverfahren hergestellt und weist am oberen Becherrand einen nach außen ragenden umlaufenden Flansch auf, an welchen außenseitig ein Deckelrandteil anschließt, wobei die Siegelfolie mit der Flanschoberfläche und der Oberfläche des Randteiles verbunden wird. Die Verbindung der Folie am den Becherflansch muss derart sein, dass sie sich beim Öffnen des Deckels nur vom Flansch und nicht vom Deckelrandteil ablöst, um ein Wiederverschließen des Bechers mit dem Deckel zu ermöglichen. Die EP 0 299 571 A1 betrifft einen der üblichen kleinen Behälter mit einer abziehbaren Folie, wie sie beispielsweise für portioniertes Kaffeeobers verwendet werden. Aus der EP 2 266 889 A2 sind sich in Wasser lösende Behälter für Reinigungsmittel bekannt, deren Becher an ihrem oberen Rand mit nach außen ragenden Flanschen versehen sind, wobei mehrere Becher über diese Flansche miteinander verbunden sind.

Aus der EP2479120 A1 und EP2377775 A1 ist ein Verschlusssystem für ein Behältnis sowie ein Verfahren zur Herstellung eines wiederverschliessbaren Behälters bekannt.

Aus der EP 2 194 952 B1 ist ein System bekannt, welches einen Einsatz (Tray) mit einzelnen, voneinander beabstandeten Kammern und einer Anzahl individueller Behälter aufweist, die einzeln entfernbar in den Kammern gehalten sind und die zu verpackende Substanz, insbesondere ein Medikament, enthalten. Um die einzelnen Behälter in den Kammern vor dem beabsichtigten Lösen lösbar zurückzuhalten, ist eine einzelne flexible Folie vorgesehen, die dichtend angebracht ist und sich über den Einsatz, der die Kammern enthält, und über alle einzelnen Behälter darin erstreckt. Die Folie ist derart mit Perforationen versehen, dass ein selektives Entfernen einzelner Behälter ermöglicht ist, während die anderen Behälter zurückgehalten und abgedichtet verschlossen bleiben. Bei einem weiteren, am Markt befindlichen System ist jeder einzelne Behälter mit einer selbstklebenden, sicher haftenden, aber ablösbaren Spezialfolie verschlossen. Jede Folie wird mit den notwendigen Informationen zu Inhalt und Patient versehen, um Verwechslungen vorzubeugen. Der zugehörige Tray bietet achtundzwanzig mit Medikamenten befüllten Behältern Platz, welche individuell befüllt und abgepackt sind. Ein spezielles Verschweißgerät versiegelt die einzelnen Behälter mit der Spezialfolie, sodass jeder Behälter dem Tray einzeln entnommen werden kann, ohne dass die anderen Behälter oder deren Folie beschädigt werden. Dieses bekannte System bietet Behälter für vier Einnahmezeitpunkte, gestattet daher keine Versorgung von Patienten, die ihre Medikamente an fünf oder sechs Einnahmezeitpunkten einnehmen müssen. Bei den bekannten Systemen entsteht viel und auch sehr voluminöser Abfall an Kunststoff. Zum Öffnen der Behälter muss die zuvor aufgeschweißte Siegelfolie entfernt werden, wobei die Öffnungskraft einerseits relativ hoch ist und von Behälter zu Behälter stark schwanken kann. Die Grifffläche, die zum Öffnen der Siegelfolie zur Verfügung steht, ist bauartbedingt gering. Das Abziehen der Folie erfordert Geschick, sodass, wenn die Behälter mit Medikamenten befüllt sind, vor allem pflegebedürftige, ältere Patienten das Abziehen der Folien nicht selbst vornehmen können. Beim Öffnen kann darüber hinaus im Behälter enthaltene Flüssigkeit leicht verschüttet werden.

Der Erfindung liegt die Aufgabe zugrunde, einen Behälter der eingangs genannten Art, der zur Verwendung in einem modularen System besonders gut geeignet sein soll, zur Verfügung zu stellen, welcher bei Gebrauch leicht und sicher mit für alle Behälter gleich großer Öffnungskraft geöffnet werden kann und trotzdem flüssigkeitsdicht mit einer Kunststofffolie verschlossen ist, die mit den notwendigen Informationen hinsichtlich des Behälterinhalts versehen werden kann. Sind die Behälter mit Medikamenten befüllt, sollen sie auch von pflegebedürftigen Personen leicht geöffnet werden können.

Gelöst wird die gestellte Aufgabe erfindungsgemäß dadurch, dass der Randteil des Deckels den oberen Rand des Bechers umläuft sowie an die Kontur des oberen Randes angepasst ist, mit dem oberen Rand des Bechers flüssigkeitsdicht, aber lösbar verbunden ist, den oberen Rand des Bechers nach außen überragt und mit der Innenseite der Becherwand bündig abschließt.

Bei einem gemäß der Erfindung ausgeführten Behälter ist ein vom Becher lösbarer, stabiler Deckel vorgesehen, auf dessen Randteil die transparente Siegelfolie aufschweißbar ist. Die Stabilität des Randteiles gestattet ein leichtes Öffnen der Behälter mit für alle Behälter gleich großer Öffnungskraft, ein Verschütten von Flüssigkeit aus dem Becher kann dadurch weitgehend vermieden werden. Bei einem erfindungsgemäß ausgeführten Behälter wird zwar die Siegelfolie nach dem Befüllen des Bechers aufgeschweißt und bildet derart mit dem Randteil den Deckel, die Folie wird jedoch zum Öffnen nicht entfernt, vielmehr wird der komplette stabile Deckel vom Becher gelöst.

Bei einer bevorzugten Ausführungsform der Erfindung ist der Randteil des Deckels am oberen Rand des Bechers wiederaufsetzbar. Im Gegensatz zu bekannten Behältern, die in Folge des Abziehens der Folie zum Öffnen nicht mehr wiederverschließbar sind, lässt sich der Deckel erfindungsgemäß ausgeführter Behälter nach einem Öffnen wieder auf den Becher aufbringen. Dies hat den Vorteil, dass Inhalt, welcher nicht zur Gänze entnommen wird, weiterhin sicher aufbewahrt werden kann.

Besonders bevorzugt ist diesbezüglich eine Ausführungsform der Erfindung, bei welcher der Randteil mit dem oberen Rand des Bechers in der Art einer Nut-Feder-Verbindung flüssigkeitsdicht und wiederaufsetzbar verbunden ist. Bei einer weiteren bevorzugten Ausführung der Erfindung ist der Randteil des Deckels mit dem oberen Rand des Bechers in der Art einer Ring-Schnappverbindung flüssigkeitsdicht und wiederaufsetzbar verbunden. Beide Varianten lassen sich einfach und kostengünstig herstellen.

Bei einer weiteren vorteilhaften Ausführungsvariante der Erfindung ist der Randteil derart ausgeführt, dass er den oberen Rand des Bechers nach außen überragt. Erfindungsgemäß ist dabei eine Ausführung, bei der der Randteil mit der Innenseite der Becherwand bündig abschließt, sodass vor allem Flüssigkeiten rückstandsfrei entleert werden können.

Bei einer weiteren vorteilhaften Ausführungsform der Erfindung weist der Randteil des Deckels eine ebene Außenfläche auf, sodass auf einfache Weise ein flüssigkeitsdichtes Aufschweißen der Siegelfolie möglich ist.

Besonders vorteilhaft ist ferner eine Ausführungsform des Behälters, bei welcher ein Originalitätssiegel vorgesehen ist, welches sein äußeres Erscheinungsbild beim erstmaligen Öffnen des Deckels sichtbar verändert. Auf diese Weise lässt sich verlässlich feststellen, ob der Behälter noch originalverschlossen ist oder bereits geöffnet wurde.

Besonders einfach herstellbar sind Varianten des Originalitätssiegels, bei welchen das Originalitätssiegel zumindest einen beim erstmaligen Abziehen des Deckels durch- oder abtrennbaren oder plastisch verformbaren Bestandteil aufweist.

Bei einer Ausführungsform der Erfindung weist das Originalitätssiegel einen am Randteil des Deckels ausgebildeten Siegelteil auf, welcher über eine Sollbruchstelle mit einem an der Außenseite der Becherwand gehaltenen Siegelteil verbunden ist.

Bei anderen, gut sichtbaren Varianten des Originalitätssiegels ist dieses als eine vom Rand des Randteiles abstehende, zweischichtig ausgeführte, einen oberen, aus dem Material des Randteiles ausgebildeten Laschenteil und einen unteren, aus dem Material des Bechers ausgebildeten Laschenteil aufweisende Lasche ausgebildet, wobei sich der obere Laschenteil beim erstmaligen Öffnen des Deckels entweder vom unteren Laschenteil oder vom Randteil löst.

Besonders bevorzugt ist ferner eine Ausführungsform, bei der die Becherwand an einer Stelle in Richtung des oberen Randes des Bechers und nach außen ausgeformt ist und derart einen Trinkschnabel bildet. Diese Ausgestaltung ermöglicht einerseits ein verschüttungsfreies Trinken von Flüssigkeit aus dem Becher und andererseits ein verschüttungsfreies Ausgießen von Flüssigkeit, beispielsweise in ein anderes Gefäß.

Besonders vorteilhaft ist ferner eine Ausführungsform des erfindungsgemäßen Behälters, bei der der Randteil des Deckels an einer Stelle, insbesondere im Bereich des Trinkschnabels, lokal verbreitert ist und derart eine Aufreißlasche zum Öffnen des Deckels bildet. Über die derart gebildete Aufreißlasche erfolgt in besonders vorteilhafter Weise die Krafteinleitung in die ursprüngliche flüssigkeitsdichte Verbindung von Deckel und Becher, sodass ein kraftsparendes Abziehen bzw. Lösen des Deckels vom Becher möglich ist.

Um einen Verlust des Deckels nach seinem Abziehen zu verhindern, ist es von Vorteil, wenn der Randteil des Deckels an einer Stelle, beispielsweise an seinem dem Trinkschnabel gegenüberliegenden Bereich, scharnierartig mit dem oberen Rand des Bechers verbunden ist.

Ein verschüttungssicheres Abstellen des Behälters lässt sich dadurch gewährleisten, dass der Becher im Bereich seines Bodens einen insbesondere ringartig umlaufenden oder zylindrisch ausgeführten Standfuß aufweist.

Um den Behälter während eines Transports auf einem Tray oder dergleichen vor Verlust zu sichern, können verschiedene erfindungsgemäße Maßnahmen getroffen werden. So kann an der Außenseite der Becherwand, insbesondere nahe des oberen Randes des Bechers, zumindest eine Abflachung, die eine Art Hinterschnitt bildet, ausgebildet sein. In der Abflachung kann ferner zumindest eine parallel zum Rand des Bechers verlaufende Rille ausgebildet sein. Solche Abflachungen werden bevorzugter Weise an einander gegenüberliegenden Stellen der Becherwand ausgebildet. Am Tray werden entsprechende Schnappstellen, Vorsprünge und dergleichen ausgebildet, die ein Einrasten der Becher auf lösbare Weise am Tray gestatten.

Die Behälter werden ferner derart ausgeführt, dass sie ineinander gestapelt werden können. Eine diesbezügliche Maßnahme besteht darin, dass der Becher vom Boden in Richtung oberem Becherrand breiter werdend ausgeführt wird.

Die Erfindung betrifft ferner einen Verband aus einer Anzahl von in einer Reihe angeordneten Behältern, die erfindungsgemäß ausgeführt sind, wobei die Randteile benachbarter Behälter jeweils miteinander lokal über zumindest eine Dünnstelle aus dem Material der Randteile verbunden sind. Auf diese Weise lassen sich mehrere ineinander gestapelte Behälterverbände platzsparend der den jeweiligen Inhalt einbringenden Stelle, beispielsweise einer Apotheke, zur Verfügung stellen. Diese Dünnstellen sind derart ausgeführt, dass sie sich thermisch oder mechanisch leicht durchtrennen lassen.

Bei einer möglichen Ausführungsform der Erfindung sind die Dünnstellen als Stege ausgebildet. Bei einer weiteren vorteilhaften Ausführungsvariante der Erfindung sind die Dünnstellen als gewölbte oder gefaltete Kunststoffhäute ausgebildet. Die Dünnstellen gestatten somit einen Ausgleich von Fertigungstoleranzen zwischen dem Behälterverband und einem Tray oder der Aufnahme einer Schweißvorrichtung zum Aufschweißen der Siegelfolie.

Besonders vorteilhaft, da kostengünstig und einfach, ist die Herstellung der Becher mitsamt den Randteilen in einem Zwei-Komponenten-Spritzgussverfahren.

Besonders bevorzugt ist eine Verwendung der Behälter bzw. der Behälterverbände gemäß der Erfindung in einem modularen System zur Bereitstellung von pharmazeutischen oder medizinischen Produkten.

Weitere Merkmale, Vorteile und Einzelheiten der Erfindung werden nun anhand der schematischen Zeichnung, die Ausführungsbeispiele der Erfindung darstellt, näher beschrieben. Dabei zeigen
Fig. 1 bis Fig. 6, 2a und 5a verschiedene Ansichten und Schnittdarstellungen eines einzelnen Behälters im gebrauchsfertigen Zustand,
Fig. 5b und 5c eine weitere Ausführungsvariante eines Scharniers,
Fig. 7 und Fig. 7a (Schnitt entlang der Linie VIIa-VIIa der Fig. 7), Fig. 8 und Fig. 8a (Schnitt entlang der Linie VIIIa-VIIIa der Fig. 8) sowie Fig. 9 und 9a (Schnitt entlang der Linie IXa-IXa der Fig. 9) je eine Ausführungsvariante eines Originalitätssiegels,
Fig. 10 einen Verband mehrerer, miteinander verbundener Behälter,
Fig. 11 und Fig. 12 Detaildarstellungen der Fig. 10 und
Fig. 13 mehrere jeweils in einem Behälterverband angeordnete, ineinander gestapelte Behälter.

Die Erfindung befasst sich mit der Ausführung von Behältern, insbesondere zur Verwendung in einem modularen System, für die Bereitstellung von portionierten Flüssigkeiten, festen oder pastösen Substanzen, vorzugsweise von Medikamenten in flüssiger oder fester Form, insbesondere von Pulver, Globuli, Pillen und dergleichen, aber auch von cremeförmigen Medikamenten. Wird das System zur Bereitstellung von Medikamenten verwendet, lässt es sich in besonders vorteilhafter Weise vor allem in stationären Einrichtungen, wie Pflegeheimen, Altersheimen und dergleichen aber auch im privaten Bereich einsetzen. In Behältern gemäß der Erfindung können jedoch auch andere Produkte bzw. Substanzen als Medikamente verpackt werden, beispielsweise Lebensmittel, kosmetische Artikel, elektronische Bauteile und dergleichen. Die gegenständliche Erfindung betrifft vorrangig eine besonders innovative Ausführung der Behälter, wobei bei der Verwendung mehrerer Behälter in einem System auch ein sogenannter Tray, eine tablettartig gestaltete Vorrichtung zum Transport und zur Aufbewahrung der Behälter, zum System gehört, welcher jedoch nicht Gegenstand dieser Erfindung ist.

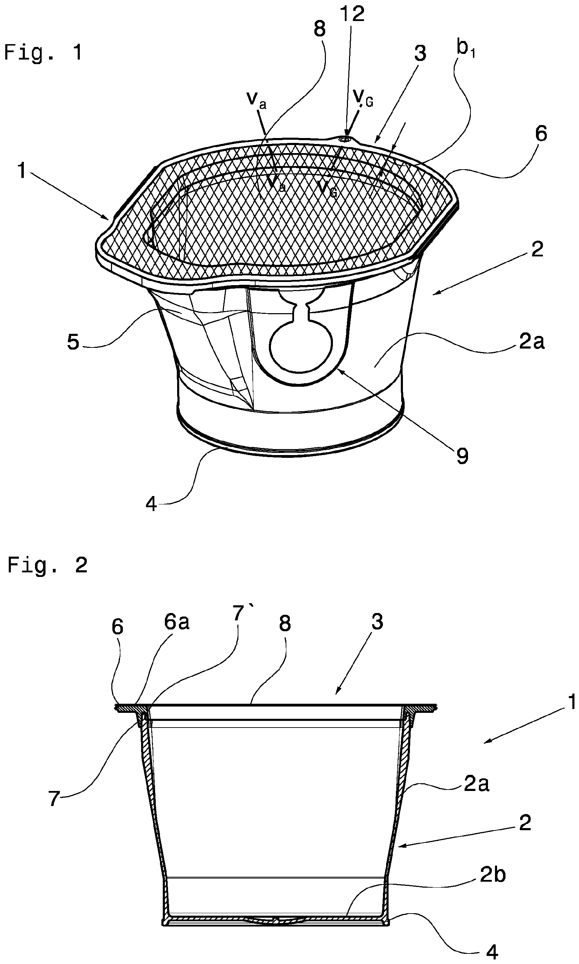

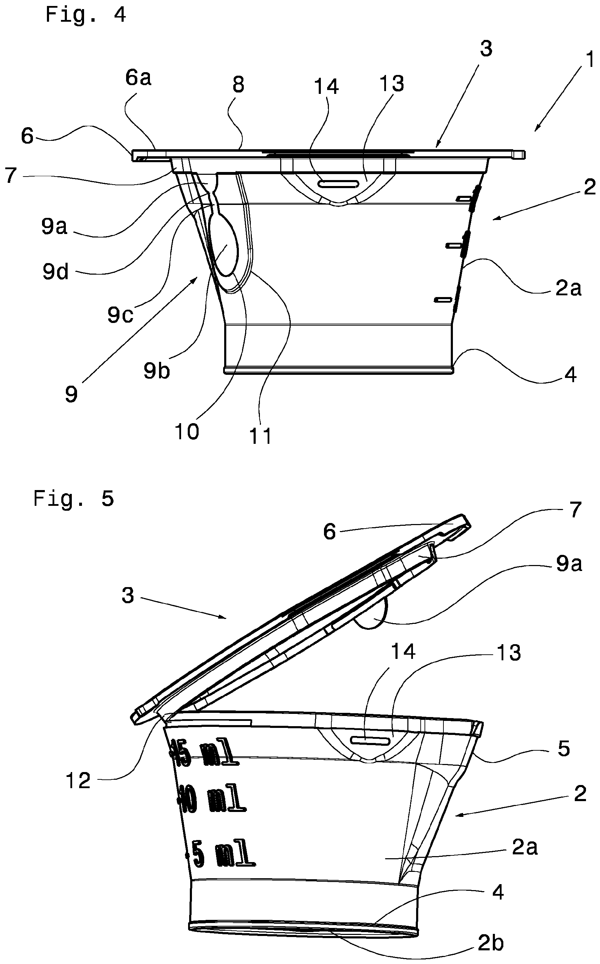

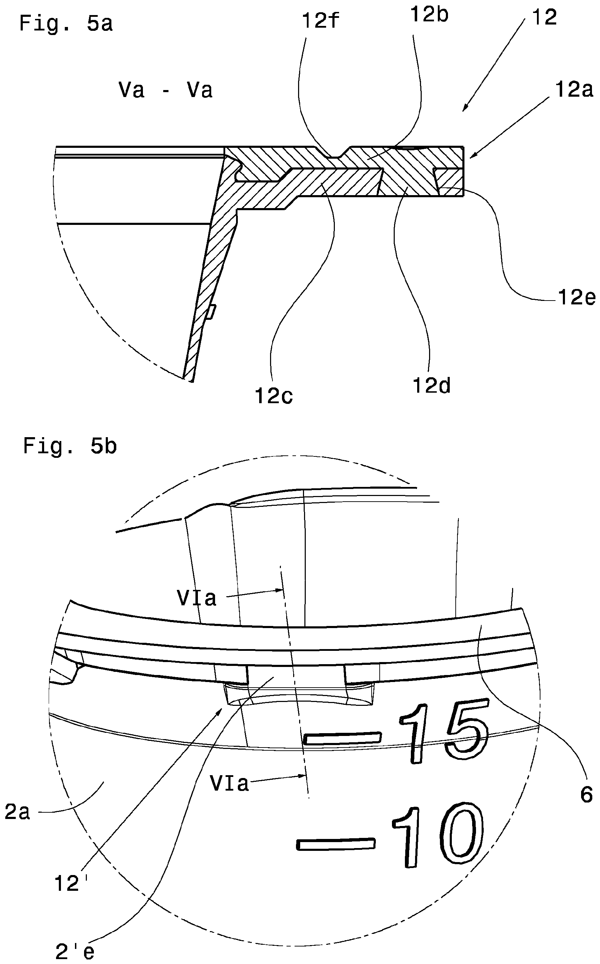

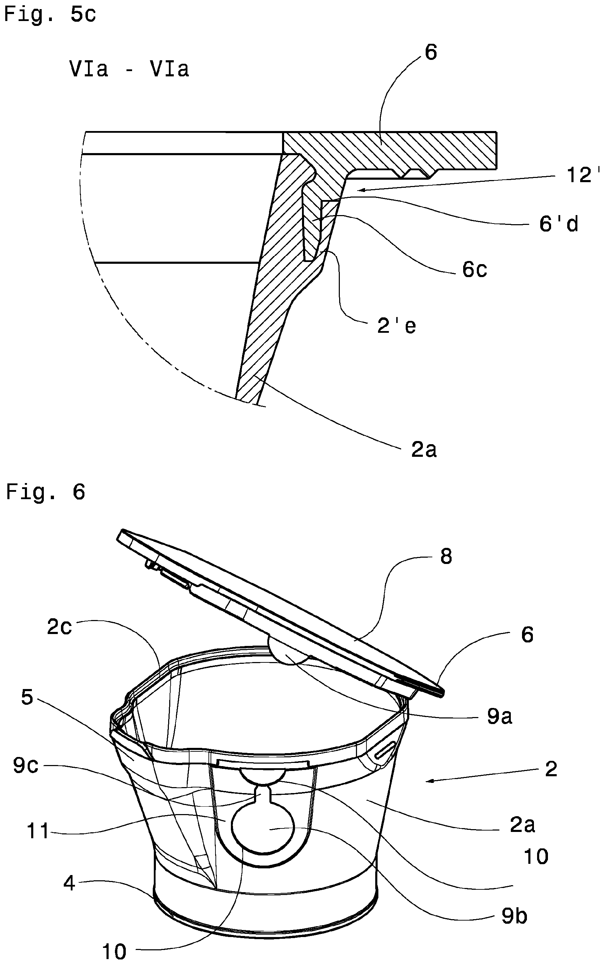

Der in den Figuren 1 bis 6, 2a und 5a dargestellte einzelne Behälter 1 besteht aus einem Becher 2 und einem Deckel 3. Der Becher 2 ist aus einem beispielsweise transparenten Kunststoffmaterial hergestellt und weist bei der dargestellten Ausführung beispielhaft ein Aufnahmevermögen für Flüssigkeit von bis zu 15 ml auf. Der Becher 2 weist ferner eine Becherwand 2a, einen Becherboden 2b und einen im Bereich des Bodens 2b umlaufenden Standfuß 4 auf. Die Becherwand 2a ist unmittelbar beim Boden 2b unter Bilden des Standfußes 4 beispielsweise zylindrisch ausgeführt und weist anschließend einen sich in Richtung ihres oberen Randes vergrößernden Durchmesser auf. Zur Feststellung des Füllstandes bei Flüssigkeiten sind in der Wand des Bechers 2 Milliliterangaben mit zugehörigen Skalenstrichen eingeprägt oder aufgedruckt. Die Becherwand 2a ist ferner an einer Stelle ihres Umfanges in Richtung oberem Rand nach außen ausgeformt und bildet derart einen Trinkschnabel 5 (Fig. 5) zur unmittelbaren Entnahme einer Flüssigkeit, beispielsweise eines flüssigen Medikamentes, wobei der Trinkschnabel 5 auch zum verschüttungsfreien Ausgießen von Flüssigkeit aus dem Becher 2, insbesondere in ein anderes Gefäß, verwendet werden kann. Wird der Boden 2b des Bechers 2 etwas nach oben versetzt, kann innerhalb des Standfußes 4 ein Hohlraum geschaffen sein, sodass der Becher 2 auf einem Tray in einer Ringnut oder über einer dem Hohlraum angepassten Erhebung positioniert und vor Verlust, beispielsweise beim Transport, gesichert werden kann.

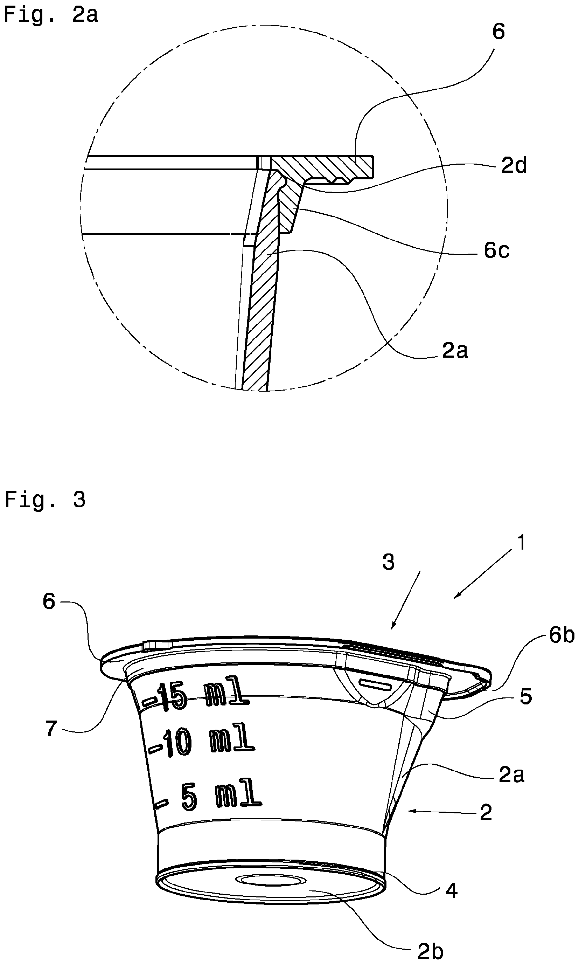

Der Deckel 3 weist einen den oberen Rand des Bechers 2 umlaufenden, an die Kontur des oberen Randes angepassten Randteil 6 auf, welcher mit dem oberen Rand des Bechers 2 flüssigkeitsdicht, aber lösbar verbunden ist. Der Randteil 6 weist bei der in Fig. 2 gezeigten Ausführung an seiner Unterseite einen umlaufenden Verbindungsansatz 7 auf, welcher den Rand des Bechers 2 mit zwei Ansätzen 7, 7` in der Art einer Nut-Feder-Verbindung umfasst und derart am oberen Rand des Bechers 2 dicht aufsitzt. Der Ansatz 7` des Randteiles 6 sitzt dabei auf einem am Rand des Bechers 2 innenseitig ausgebildeten umlaufenden Absatz 2c (Fig. 6), sodass der becherinnenseitige Rand des Randteiles 6 mit der Innenseite der Becherwand 2a bündig abschließt. Der eine Breite bi von beispielsweise etwa 2 mm bis etwa 4 mm aufweisende Randteil 6 überragt daher den oberen Rand des Bechers 2 nach außen und weist eine ebene Oberfläche 6a auf. Nach dem Befüllen des Behälters 1 wird auf die Oberfläche 6a eine beispielsweise transparente, den Becher 2 verschließende Siegelfolie 8 aufgeschweißt, die in den Figuren 1 bis 6 dargestellt ist. Im Bereich des Trinkschnabels 5 ist der Randteil 6 lokal verbreitert und bildet hier eine Aufreißlasche 6b zum Entfernen bzw. Öffnen des Deckels 3.

Die Schnittdarstellung in Fig. 2a zeigt eine Variante der Anordnung und Ausführung des Randteiles 6 mit einer Ring-Schnappverbindung zum oberen Rand des Bechers 2. Am Rand des Bechers 2 ist außenseitig ein gerundeter Vorsprung 2d vorgesehen, auf welchem der Randteil 6 von außen, gegengleich ausgebildet, sitzt. Entlang des oberen Bereiches der Becherwandaußenseite verläuft ein kurzer Ansatz 6c des Randteiles 6, becherinnenseitig schließt der Randteil 6 mit der inneren Becherwand bündig ab.

Wie beispielsweise Fig. 1 und 4 zeigen, ist der Behälter 1 mit einem Originalitätssiegel 9 versehen, welches mit dem Randteil 6 des Deckels 3 einteilig hergestellt ist und einen am unteren Rand des Randteiles 6 ausgebildeten, bei der gezeigten Ausführung etwa halbkreisförmigen Siegelteil 9a aufweist, welcher über einen Verbindungssteg 9c mit einem beispielsweise kreisförmigen Siegelteil 9b verbunden ist. Zwischen dem Verbindungssteg 9c und dem Siegelteil 9a ist eine Sollbruchstelle 9d, insbesondere eine lokale Materialschwächung, ausgebildet. Der Verbindungssteg 9c und die Siegelteile 9a und 9b sind in einer an der Becherwand 2a ausgebildeten, der äußeren Form dieser Teile angepassten flachen Vertiefung 10 positioniert, die in einer örtlich ausgebildeten flachen Erhebung 11 ausgebildet ist. Die Außenfläche der Erhebung 11 und die Außenflächen der Teile des Originalitätssiegels 9 schließen miteinander bündig ab. Beim Öffnen des Deckels 3 wird die Sollbruchstelle 9d durchtrennt, der Siegelteil 9a verbleibt am Deckel 3, der Siegelteil 9b und der Verbindungssteg 9c verbleiben an der Becherwand 2a, wie in Fig. 6 gezeigt ist, sodass auch nach einem Wiederaufsetzen des Deckels 3 zu erkennen ist, dass der Behälter 1 bereits geöffnet wurde.

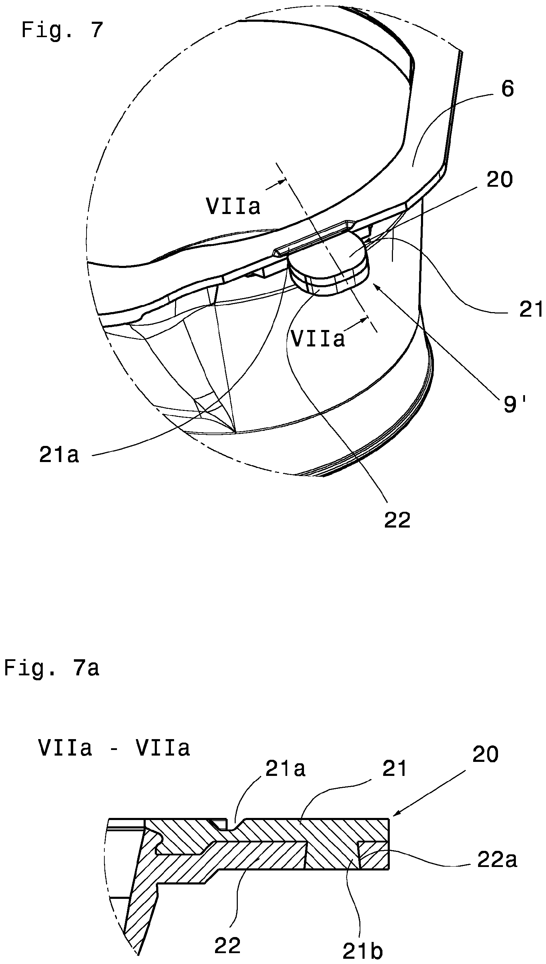

Es gibt eine Anzahl von Möglichkeiten, ein Originalitätssiegel auszuführen, beispielsweise zeigen Fig. 7 und 7a, Fig. 8 und 8a sowie Fig. 9 und 9a weitere Varianten.

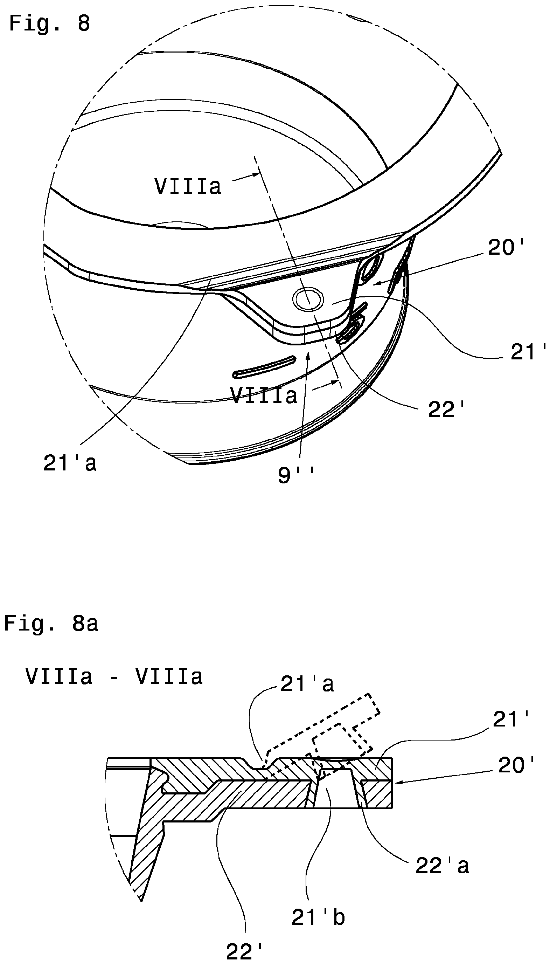

Fig. 7 und 7a sowie Fig. 8 und 8a zeigen je eine Ausführung eines Originalitätssiegels 9', 9", bei welchen vom Randteil 6 eine zweischichtige Lasche 20, 20` absteht, die aus einem aus dem Material des Randteiles 6 gebildeten oberen Laschenteil 21, 21' und aus einem aus dem Material des Bechers 2 gebildeten unteren Laschenteil 22, 22' besteht. Bei der in Fig. 7 und 7a gezeigten Ausführung ist der obere Laschenteil 21 beim äußeren Rand des Randteiles 6 mit einer eine Abrissstelle bildenden Vertiefung 21a versehen. Bei der in Fig. 8 und 8a dargestellten Variante ist zwischen dem oberen Laschenteil 21' und dem Rand des Randteiles 6 eine Vertiefung 21'a ausgebildet, die ein Gelenk bildet. An der Unterseite des oberen Laschenteils 21, 21' ist jeweils ein im Querschnitt (Fig. 7a, 8a) beispielsweise schwalbenschwanzförmiger Anker 21b, 21'b ausgebildet, welcher in einer gegengleich ausgebildeten Aussparung 22a, 22`a im unteren Laschenteil 22, 22' sitzt. In Fig. 7 und 7a ist die Ausführung derart, dass die beiden Laschenteile 21 und 22 miteinander verbunden bleiben und beim erstmaligen Öffnen des Deckels 3 der obere Laschenteil 21 entlang der Vertiefung 21a vom Randteil 6 abgetrennt wird. Bei der in Fig. 8 und 8a dargestellten Variante löst sich der Anker 21'b beim erstmaligen Öffnen des Deckels 3 aus der Aussparung 22'a, kann jedoch nicht mehr in der Aussparung 22' eingerastet werden, sodass der obere Laschenteil 21' vom Randteil 6 schräg nach oben absteht, wie es in Fig. 8a mit gestrichelten Linien angedeutet ist.

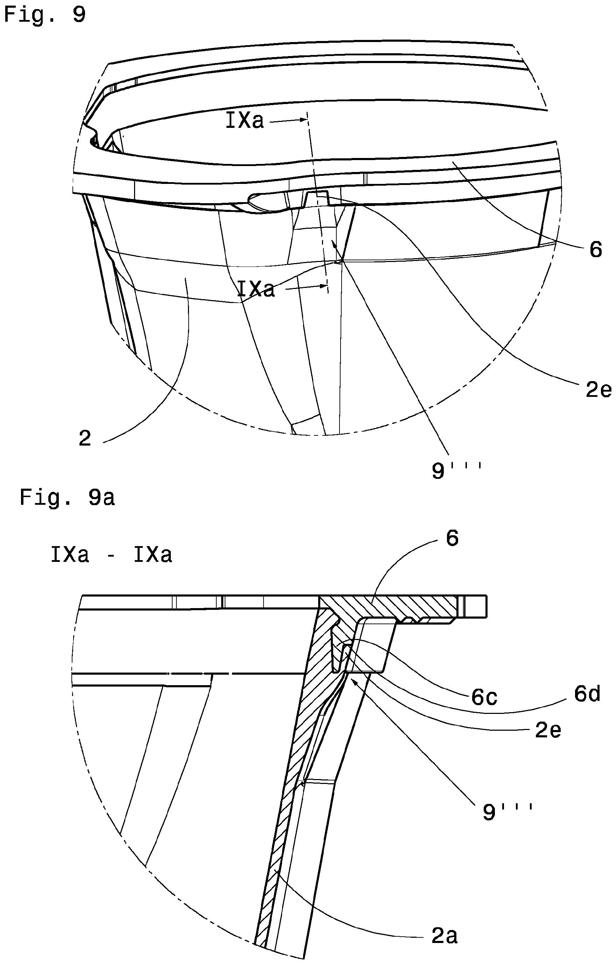

Die in Fig. 9 und 9a gezeigte Variante eines Originalitätssiegel 9‴ eignet sich bei einer Ausführung mit einer Ringschnapp-Verbindung zwischen dem Randteil 6 und dem Becher 2 gemäß Fig. 2a. An einer geeigneten Stelle im Umfang des Randteiles 6 ist der Ansatz 6c des Randteiles 6 etwas verbreitert, sodass unterhalb eines am Ansatz 6c ausgebildeten Hinterschnittes 6d eine kurze, dünne Lasche 2e aus dem Material des Bechers 2 ausgebildet werden kann. Beim Öffnen des Deckels 3 verformt sich die Lasche 2e plastisch nach außen und bleibt sichtbar verformt, auch wenn der Deckel 3 wieder aufgesetzt wird.

Vorzugsweise an seinem dem Trinkschnabel 5 gegenüberliegenden Bereich ist der Randteil 6 mittels eines Scharniers 12 (Fig. 5, Fig. 5a) mit dem Rand des Bechers 2 verbunden, sodass ein geöffneter Deckel 3 mit dem Becher 2 in Verbindung bleibt und der Behälter 1 auf einfache Weise wieder verschlossen werden kann. Das Scharnier 12 kann derart ausgeführt sein, dass der Deckel 3 vom Behälter 1 auch abgetrennt werden kann.

Fig. 5a zeigt eine mögliche Ausführung des Scharniers 12. Aus dem Material des Bechers 2 und aus dem Material des Randteiles 6 wird eine zweischichtige Lasche 12a ausgebildet, welche einen oberen Laschenteil 12b und einen unteren Laschenteil 12c aufweist. Der obere, aus dem Material des Randteiles 6 bestehende Laschenteil 12b weist an seiner Unterseite einen Anker 12d auf, welcher bei der gezeigten Ausführung im Querschnitt schwalbenschwanzförmig gestaltet ist und in einer gegengleich ausgebildeten Aussparung 12e des unteren Laschenteiles 12c sitzt. Beim Rand des Randteiles 6 ist im oberen Laschenteil 12b eine Vertiefung 12f ausgebildet, die als Gelenk beim Öffnen des Deckels 3 dient. Die Verbindung zwischen den beiden Laschenteilen 12b, 12c ist insbesondere derart, dass der Anker 12d nicht oder nur mit größerem Kraftaufwand aus der Aussparung 12e lösbar ist.

Die in Fig. 5b und 5c gezeigte Variante eines Scharniers 12' eignet sich bei einer Ausführung mit einer Ringschnapp-Verbindung zwischen dem Randteil 6 und dem Becher 2 gemäß Fig. 2a. An der betreffenden Stelle im Umfang des Randteiles 6 ist der Ansatz 6c des Randteiles 6 etwas verbreitert, sodass unterhalb eines am Ansatz 6c ausgebildeten Hinterschnittes 6`d eine dünne Lasche 2`e aus dem Material des Bechers 2 ausgebildet werden kann. Die Ausgestaltung ist derart, dass die unterste Stelle des Ansatzes den "Drehpunkt" beim Öffnen des Deckels 3 bildet, wobei die Lasche 2`e mit dem Ansatz 6c bis zu einem Öffnungswinkel von zumindest 90° verbunden bleibt. Ein Ablösen des Deckels 3 ist jedoch möglich.

Weitere, alternativ oder gemeinsam vorgesehene Ausgestaltungen können vorgesehen sein, um den Behälter 1 auf einem Tray zu sichern. Wie beispielsweise Fig. 4 und 5 zeigen, können auf der Becherwand 2a, insbesondere an zwei einander gegenüberliegenden Bereichen, knapp unterhalb des oberen Becherrandes abgeflachte Stellen 13 ausgebildet sein, die jeweils einen "Hinterschnitt" für ein Einrasten an gegengleich ausgebildeten Vorsprüngen einer Öffnung im Tray bilden. In den abgeflachten Stellen 13 kann jeweils eine kurze, mehrere Millimeter lange, schmale, etwa 2 mm breite Rille 14 ausgebildet sein, die vorzugsweise parallel zum Rand verläuft. In diese Rillen 14 kann jeweils beispielsweise ein am Tray vorgesehener Einschnappteil eingerastet werden.

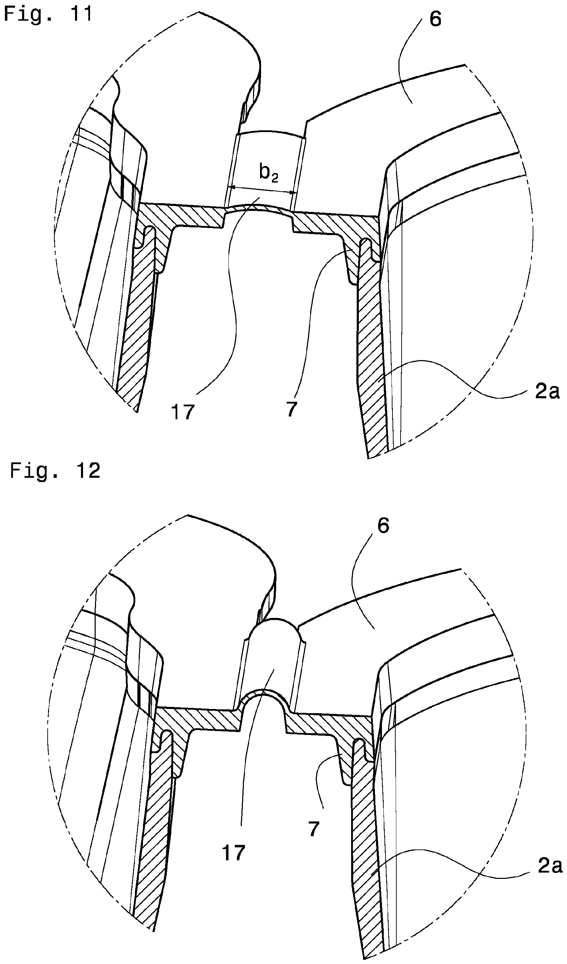

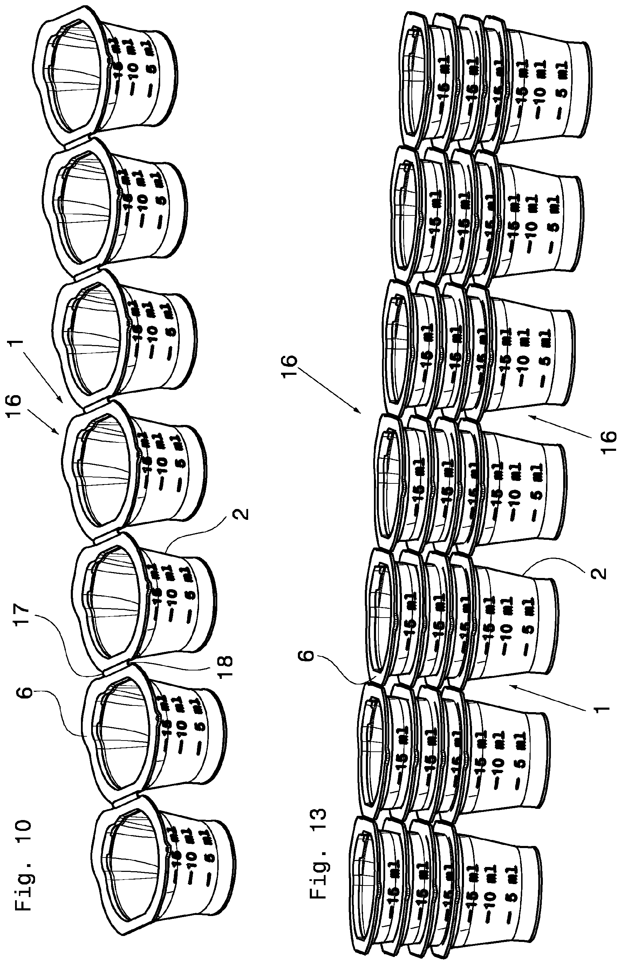

Die Herstellung der Behälter 1 erfolgt in einem Zwei-Komponenten-Spritzguss-Verfahren (Montagespritzguss), wobei ein Verband 16 aus einer Anzahl von Behältern 1, beispielsweise aus sieben Behältern 1, hergestellt wird. Beim Herstellprozess werden beispielsweise sieben Behälter 1 über Dünnstellen 17 an ihren Randteilen 6 miteinander verbunden. Fig. 10 zeigt einen derartigen Verband 16 unmittelbar nach der Herstellung. Die Dünnstellen 17 befinden sich versetzt zu jenen Bereichen, wo die Trinkschnäbel 5 und die Originalitätsverschlüsse 9 ausgebildet sind. Bei einer bevorzugten Ausführungsform der Erfindung, die in Fig. 11 und Fig. 12 dargestellt ist, sind die Dünnstellen 17 nach oben gewölbte Kunststoffhäute zwischen den Randteilen 6 benachbarter Behälter 1. Die Kunststoffhäute weisen im gestreckten Zustand (Fig. 11) eine Breite b₂ von beispielsweise 1,0 mm bis 1,5 mm auf und gestatten einen Ausgleich von Fertigungstoleranzen in einem gewissen Längsbereich, wie in Fig. 11 und Fig. 12 gezeigt. Die Kunststoffhäute können auch gefaltet ausgeführt sein und dadurch gestreckt werden. Insbesondere können auf diese Weisen Fertigungstoleranzen zwischen dem Behälterverband 16 und dem Tray ausgeglichen werden. Die Dünnstellen 17 können grundsätzlich auch lediglich "punktförmige" bzw. stegartig ausgebildete Verbindungsstellen zwischen den Randteilen 6 sein. Das Trennen bzw. Vereinzeln der Behälter 1 kann beim Aufschweißen der Siegelfolie 8, also thermisch, erfolgen, kann jedoch auch mechanisch, beispielsweise durch Stanzen oder Schneiden, durchgeführt werden.

Ein Behälter-Verband 16 kann selbstverständlich mehr oder weniger als sieben Behälter 1 umfassen.

Die in Verbänden 16 hergestellten Behälter 1 werden, wie es in Fig. 13 gezeigt ist, platzsparend mehrfach ineinander gestapelt der befüllenden Stelle, bei Medikamenten vor allem einer Apotheke, einem Pflegedienst oder dergleichen, zum Befüllen zur Verfügung gestellt. Sollen die Behälterverbände 16 mit Medikamenten befüllt werden, so werden mehrere Behälterverbände 16, beispielsweise vier bis sechs, in einem personalisierten Tray positioniert und anschließend befüllt. Nach dem Befüllen der Behälter 1 erfolgt das Aufbringen der Siegelfolien 8, welche bereits entsprechend beschriftet sind. Der jedem Patienten zugeordnete Tray wird anschließend ausgeliefert.

### Bezugsziffernliste

- 1: Behälter
- 2: Becher
- 2a: Becherwand
- 2b: Boden
- 2c: Absatz
- 2d: Vorsprung
- 2e, 2'e: Lasche
- 3: Deckel
- 4: Standfuß
- 5: Trinkschnabel
- 6: Randteil
- 6a: Oberfläche
- 6b: Aufreißlasche
- 6c: Ansatz
- 6d, 6' d: Hinterschnitt
- 7, 7: Ansatz
- 8: Siegelfolie
- 9, 9', 9", 9: Originalitätssiegel
- 9a: Siegelteil
- 9b: Siegelteil
- 9c: Verbindungssteg
- 9d: Sollbruchstelle
- 10: Vertiefung
- 11: Erhebung
- 12, 12: Scharnier
- 12a: Lasche
- 12b: Laschenteil
- 12c: Laschenteil
- 12d: Anker
- 12e: Aussparung
- 12f: Vertiefung
- 13: abgeflachte Stelle
- 14: Rille
- 16: Verband
- 17: Dünnstelle
- 20, 20: Lasche
- 21, 21: Laschenteil
- 21a, 21'a: Vertiefung
- 21b, 21'b: Anker
- 22, 22: Laschenteil
- 22a, 22'a: Aussparung
- b₁: Breite
- b₂: Breite

## Patentansprüche

1. Behälter (1) zum Verpacken von flüssigen, pastösen oder festen Subtanzen oder von Kleinteilen, welcher einen Becher (2) aus Kunststoff und einen mit diesem flüssigkeitsdicht verschließbaren Deckel (3) aus Kunststoff aufweist, wobei der Deckel (3) einen mit einer ebenen Oberfläche versehenen Randteil (6) und eine mit der Oberfläche des Randteiles (6) flüssigkeitsdicht verbundene Siegelfolie (8) aufweist, welche nachträglich, insbesondere nach dem Befüllen des Bechers (2), auf der Oberfläche des Randteiles (6) aufgeschweißt ist, wobei der Becher (2) gemeinsam mit dem Randteil (6) des Deckels (3) in einem Zwei-Komponenten-Spritzgussverfahren hergestellt ist,
**dadurch gekennzeichnet,**
**dass** der Randteil (6) des Deckels (3) den oberen Rand des Bechers (2) umläuft sowie an die Kontur des oberen Randes angepasst ist, mit dem oberen Rand des Bechers (2) flüssigkeitsdicht, aber lösbar verbunden ist, den oberen Rand des Bechers (2) nach außen überragt und mit der Innenseite der Becherwand (2a) bündig abschließt.

2. Behälter (1) nach Anspruch 1, **dadurch gekennzeichnet, dass** der Randteil (6) des Deckels (3) am oberen Rand des Bechers (2) wiederaufsetzbar ist.

3. Behälter (1) nach Anspruch 1 oder 2, **dadurch gekennzeichnet, dass** der Randteil (6) des Deckels (3) mit dem oberen Rand des Bechers (2) in der Art einer Nut-Feder-Verbindung oder einer Ring-Schnappverbindung flüssigkeitsdicht und wiederaufsetzbar verbunden ist.

4. Behälter (1) nach einem der Ansprüche 1 bis 3, **dadurch gekennzeichnet, dass** er zumindest ein Originalitätssiegel (9, 9', 9", 9‴) aufweist, welches sein äußeres Erscheinungsbild beim erstmaligen Öffnen des Deckels (3) sichtbar verändert.

5. Behälter (1) nach Anspruch 4, **dadurch gekennzeichnet, dass** das Originalitätssiegel (9, 9') zumindest einen beim erstmaligen Abziehen des Deckels (3) durch- oder abtrennbaren Bestandteil (9a, 9b; 21, 22) oder einen sich plastisch verformenden Bestandteil (21', 22'; 2e) aufweist.

6. Behälter (1) nach Anspruch 4 oder 5, **dadurch gekennzeichnet, dass** das Originalitätssiegel (9) einen am Randteil (6) des Deckels (3) ausgebildeten Siegelteil (9a) aufweist, welcher über eine Sollbruchstelle (9d) mit einem an der Außenseite der Becherwand (2a) gehaltenen Siegelteil (9b) verbunden ist.

7. Behälter (1) nach Anspruch 4 oder 5, **dadurch gekennzeichnet, dass** das Originalitätssiegel (9', 9") als eine vom Rand des Randteiles (6) abstehende, zweischichtig ausgeführte, einen oberen, aus dem Material des Randteiles (6) ausgebildeten Laschenteil (21, 21') und einen unteren, aus dem Material des Bechers (2) ausgebildeten Laschenteil (22, 22') aufweisende Lasche (20, 20') ausgebildet ist, wobei sich der oberer Laschenteil (21, 21') beim erstmaligen Öffnen des Deckels (3) entweder vom unteren Laschenteil (22) oder vom Randteil (6) löst.

8. Behälter (1) nach einem der Ansprüche 1 bis 7, **dadurch gekennzeichnet, dass** die Becherwand (2a) an einer Stelle in Richtung des oberen Randes des Bechers (2) und nach außen ausgeformt ist und derart einen Trinkschnabel (5) bildet.

9. Behälter (1) nach einem der Ansprüche 1 bis 8, **dadurch gekennzeichnet, dass** der Randteil (6) des Deckels (3) an einer Stelle, insbesondere im Bereich des Trinkschnabels (5), lokal verbreitert ist und derart eine Aufreißlasche (6b) zum Öffnen des Deckels (3) bildet.

10. Behälter (1) nach einem der Ansprüche 1 bis 9, **dadurch gekennzeichnet, dass** der Randteil (6) des Deckels (3) an einer Stelle, beispielweise an seinem dem Trinkschnabel (5) gegenüberliegenden Bereich, scharnierartig mit dem oberen Rand des Bechers (2) verbunden ist.

11. Behälter (1) nach einem der Ansprüche 1 bis 10, **dadurch gekennzeichnet, dass** an der Außenseite der Becherwand (2a), insbesondere nahe des oberen Randes, zumindest eine abgeflachte Stelle (13), die eine Art Hinterschnitt bildet, ausgebildet ist, wobei vorzugsweise in der abgeflachten Stelle (13) eine insbesondere parallel zum Rand des Bechers (2) verlaufende Rille (14) ausgebildet ist.

12. Verband (16) aus einer Anzahl von in einer Reihe angeordneten Behältern (1), die gemäß einem oder mehreren der Ansprüche 1 bis 11 ausgeführt sind, wobei die Randteile (6) der Deckel (3) benachbarter Behälter (1) miteinander lokal über jeweils zumindest eine Dünnstelle (17) aus dem Material der Randteile (6) verbunden sind.

13. Verband (16) nach Anspruch 12, **dadurch gekennzeichnet, dass** die Dünnstellen als Stege oder als beispielsweise gewölbte oder gefaltete Kunststoffhäute ausgebildet sind.

14. Verband (16) nach einem der Ansprüche 12 oder 13, **dadurch gekennzeichnet, dass** die Becher (2) mit den Randteilen (6) in einem Zwei-Komponenten-Spritzguss-Verfahren hergestellt sind.

## Claims

1. Container (1) for packaging liquid, pasty or solid substances or small parts, which has a beaker (2) of plastic and a cover (3) of plastic liquid-tightly sealable to it, wherein the cover (3) has an edge part (6) provided with a flat surface and a sealing film (8) connected liquid-tightly to the surface of the edge part (6), which is subsequently sealed onto the surface of the edge part (6), in particular after filling the beaker (2), wherein the beaker (2) is manufactured together with the edge part (6) of the cover (3) in a two-component injection moulding process, **characterised in that,**
the edge part (6) of the cover (3) surrounds the upper edge of the beaker (2) and is matched to the contour of the upper edge, liquid-tightly but detachably connected to the upper edge of the beaker (2), protrudes outwards from the upper edge of the beaker (2) and closes flush with the inner side of the beaker wall (2a).

2. Container (1) according to Claim 1, **characterised in that** the edge part (6) of the cover (3) can be remounted on the upper edge of the beaker (2).

3. Container (1) according to Claim 1 or 2, **characterised in that** the edge part (6) of the cover (3) is liquid-tightly and remountably connected to the upper edge of the beaker (2) in the form of a tongue-and-groove connection or a ring snap connection.

4. Container (1) according to one of Claims 1 to 3, **characterised in that** it has at least one tamper-proof seal (9, 9', 9", 9‴), which visibly changes its outer appearance at the first opening of the cover (3).

5. Container (1) according to Claim 4, **characterised in that** the tamper-proof seal (9, 9') has at least one part (9a, 9b; 21, 22) severable or detachable at the first removal of the cover (3) or a plastically deforming part (21', 22'; 2e).

6. Container (1) according to Claim 4 or 5, **characterised in that** the tamper-proof seal (9) has a seal part (9a) formed on the edge part (6) of the cover (3), said seal part being connected through a predetermined breaking point (9d) to a seal part (9b) retained on the outer side of the beaker wall (2a).

7. Container (1) according to Claim 4 or 5, **characterised in that** the tamper-proof seal (9', 9") is formed as a tab (20, 20') protruding from the edge of the edge part (6), said tab being made in two layers, having an upper tab part (21, 21') formed from the material of the edge part (6) and a lower tab part (22, 22`) formed from the material of the beaker (2), wherein the upper tab part (21, 21') detaches itself either from the lower tab part (22) or from the edge part (6) at the first opening of the cover (3).

8. Container (1) according to one of Claims 1 to 7, **characterised in that** the beaker wall (2a) is shaped at one point in the direction of the upper edge of the beaker (2) and outwards, and as such forms a drinking spout (5).

9. Container (1) according to one of Claims 1 to 8, **characterised in that** the edge part (6) of the cover (3) is locally widened at one point, in particular in the region of the drinking spout (5) and as such forms a pull tab (6b) for opening the cover (3).

10. Container (1) according to one of Claims 1 to 9, **characterised in that** the edge part (6) of the cover (3) is connected like a hinge at one point, for example at its region opposite the drinking spout (5), to the upper edge of the beaker (2).

11. Container (1) according to one of Claims 1 to 10, **characterised in that**, at least one flattened point (13), which forms a kind of undercut is formed on the outer side of the beaker wall (2a), in particular near the upper edge, wherein a groove (14) extending in particular parallel to the edge of the beaker (2) is formed preferably at the flattened point (13).

12. Group (16) of a number of containers (1) arranged in a row, which are made according to one or more of Claims 1 to 11, wherein the edge parts (6) of the covers (3) of adjacent containers (1) are locally connected together by at least one thin point (17) of the material of the edge parts (6).

13. Group (16) according to Claim 12, **characterised in that** the thin points are formed as bridges or for example as arched or folded plastic skins.

14. Group (16) according to Claim 12 or 13, **characterised in that** the beakers (2) with the edge parts (6) are manufactured in a two-component injection moulding process.

## Revendications

1. Récipient (1) pour l'emballage de substances liquides, pâteuses ou solides ou de petits morceaux, qui présente un gobelet (2) en matière plastique et un couvercle (3) en matière plastique pouvant être fermé avec celui-ci de manière étanche aux liquides, le couvercle (3) présentant une partie de bord (6) pourvue d'une surface plane et une feuille de scellement (8) reliée de manière étanche aux liquides à la surface de la partie de bord (6), qui est soudée ultérieurement, en particulier après le remplissage du gobelet (2), sur la surface de la partie de bord (6), le gobelet (2) étant fabriqué conjointement avec la partie de bord (6) du couvercle (3) dans un procédé de moulage par injection à deux composants, **caractérisé en ce que**
la partie de bord (6) du couvercle (3) entoure le bord supérieur du gobelet (2) et est adaptée au contour du bord supérieur, est reliée au bord supérieur du gobelet (2) de manière étanche aux liquides mais amovible, dépasse le bord supérieur du gobelet (2) vers l'extérieur et se termine en affleurement avec le côté intérieur de la paroi de gobelet (2a).

2. Récipient (1) selon la revendication 1, **caractérisé en ce que** la partie de bord (6) du couvercle (3) peut être replacée sur le bord supérieur du gobelet (2).

3. Récipient (1) selon la revendication 1 ou 2, **caractérisé en ce que** la partie de bord (6) du couvercle (3) est reliée au bord supérieur du gobelet (2) de manière étanche aux liquides et pouvant être replacé, à la manière d'un assemblage à rainure et languette ou d'un assemblage à bague et encliquetage.

4. Récipient (1) selon l'une quelconque des revendications 1 à 3, **caractérisé en ce qu'**il présente au moins un sceau d'inviolabilité (9, 9', 9", 9‴) qui modifie visiblement son aspect extérieur lors de la première ouverture du couvercle (3).

5. Récipient (1) selon la revendication 4, **caractérisé en ce que** le sceau d'inviolabilité (9, 9') présente au moins un composant (9a, 9b ; 21, 22) pouvant être traversé ou séparé lors du premier retrait du couvercle (3) ou un composant (21', 22' ; 2e) se déformant plastiquement.

6. Récipient (1) selon la revendication 4 ou 5, **caractérisé en ce que** le sceau d'inviolabilité (9) présente une partie de scellage (9a) formée sur la partie de bord (6) du couvercle (3), laquelle est reliée par un point destiné à la rupture (9d) à une partie de scellage (9b) maintenue sur le côté extérieur de la paroi de gobelet (2a).

7. Récipient (1) selon la revendication 4 ou 5, **caractérisé en ce que** le sceau d'inviolabilité (9', 9") se présente sous la forme d'une languette (20, 20') à deux couches qui dépasse du bord de la partie de bord (6) et qui présente une partie de languette supérieure (21, 21') réalisée dans le matériau de la partie de bord (6) et une partie de languette inférieure (22, 22') réalisée dans le matériau du gobelet (2), la partie de languette supérieure (21, 21') se détachant soit de la partie de languette inférieure (22), soit de la partie de bord (6) lors de la première ouverture du couvercle (3).

8. Récipient (1) selon l'une quelconque des revendications 1 à 7, **caractérisé en ce que** la paroi de gobelet (2a) est formée à un endroit vers le bord supérieur du gobelet (2) et vers l'extérieur, formant ainsi un bec verseur (5).

9. Récipient (1) selon l'une quelconque des revendications 1 à 8, **caractérisé en ce que** la partie de bord (6) du couvercle (3) est localement élargie à un endroit, en particulier dans la zone du bec verseur (5), formant ainsi une languette d'arrachage (6b) pour l'ouverture du couvercle (3).

10. Récipient (1) selon l'une quelconque des revendications 1 à 9, **caractérisé en ce que** la partie de bord (6) du couvercle (3) est reliée à un endroit, par exemple dans sa zone opposée au bec verseur (5), à la manière d'une charnière, au bord supérieur du gobelet (2).

11. Récipient (1) selon l'une quelconque des revendications 1 à 10, **caractérisé en ce que**, sur le côté extérieur de la paroi de gobelet (2a), en particulier à proximité du bord supérieur, au moins une zone aplatie (13), qui forme une sorte de contre-dépouille, est formée, une rainure (14) s'étendant en particulier parallèlement au bord du gobelet (2) étant de préférence formée dans la zone aplatie (13).

12. Groupement (16) constitué d'un certain nombre de récipients (1) disposés en ligne, qui sont réalisés selon une ou plusieurs des revendications 1 à 11, dans lesquels les parties de bord (6) des couvercles (3) de récipients (1) voisins sont reliées entre elles localement par respectivement au moins un point mince (17) constitué du matériau des parties de bord (6).

13. Groupement (16) selon la revendication 12, **caractérisé en ce que** les points minces se présentent sous la forme d'entretoises ou de peaux en matière plastique bombées ou pliées, par exemple.

14. Groupement (16) selon l'une quelconque des revendications 12 ou 13, **caractérisé en ce que** les gobelets (2) avec les parties de bord (6) sont fabriqués dans un procédé de moulage par injection à deux composants.
